# NEUE EUROPÄISCHE PATENTSCHRIFT

(11) **EP 0 264 925 B2**
(45) Veröffentlichungstag und Bekanntmachung des Hinweises auf die Entscheidung über den Einspruch: **06.04.1994**
(45) Hinweis auf die Patenterteilung: 02.01.1991
(21) Anmeldenummer: 87115382.1
(22) Anmeldetag: 21.10.1987
(51) Int. Cl.: B60P 1/64

(54) **Verfahren zum Aufnehmen und Absetzen eines Hohl-Behälters, wie Silo, Container oder dergleichen, auf bzw. von einem Fahrzeug mit Wechselgerät, Wechselgerät zur Durchführung des Verfahrens sowie bei der Durchführung des Verfahrens verwendbarer Behälter**
Process for lifting and lowering a vessel such as a silo, container or the like from or to a vehicle with an exchanging device, exchanging device for carrying out the process, and vessel for use in carrying out the process
Procédé pour charger et décharger un récipient creux, tel qu'un silo, conteneur ou semblable sur/d'un véhicule à l'aide d'un dispositif interchangeable, dispositif interchangeable pour la réalisation de ce procédé ainsi que récipient utilisé pour la réalisation de ce procédé

(30) Priorität: 23.10.1986 DE 3636037
(43) Veröffentlichungstag der Anmeldung: 27.04.1988
(73) Patentinhaber: EDELHOFF M.S.T.S. GMBH, D-58640 Iserlohn (DE)
(72) Erfinder: Bock, Normann, D-2808 Syke-Barrien (DE)
(74) Vertreter: Jabbusch, Wolfgang, Dr.Jur. Jabbusch, Wehser & Lauerwald Patentanwälte

(56) Entgegenhaltungen:
- DE-A- 1 292 518
- DE-A- 2 144 562
- DE-A- 3 312 508
- DE-A- 3 329 412
- DE-U- 8 019 121
- US-A- 2 606 676
- US-A- 3 355 043

## Beschreibung

Die Erfindung betrifft ein Verfahren zum Aufnehmen und Absetzen eines Hohl-Behälters, wie Silo, Container oder dergleichen, auf bzw. von einem Fahrzeug mit Wechselgerät mit den Merkmalen des Oberbegriffs des unabhängigen Anspruchs 1 sowie ein Wechselgerät zur Durchführung des Verfahrens mit den Merkmalen des Oberbegriffs des unabhängigen Anspruchs 6.

Ein solches Verfahren sowie ein derartiges Wechselgerät ist aus US-A-3 355 043 bekannt.

Dieses Fahrzeug ist aber nicht geeignet, einen Container in schräger Stellung abzustützen, um schwere Lasten sicher abzusetzen.

Mit einem Wechselgerät ausgerüstete Fahrzeuge sind Spezialfahrzeuge, die in der Lage sind, leere oder gefüllte Wechselbehälter aufzunehmen oder abzusetzen und zu transportieren. Insbesondere Silobehälter stehen am Aufstellungsort lotrecht. Sie müssen jedoch mit dem Fahrzeug zum Aufstellungsort hin oder vom Aufstellungsort weg in liegender Stellung befördert werden. Ein zum Aufnehmen und Absetzen solcher Silos geeignetes Wechselgerät, mit dem ein aufzustellender Behälter, insbesondere ein Silo, von der liegenden Stellung in die lotrecht stehende Stellung überführbar ist, ist nach der DE-A 33 29 412 bekannt. Dabei sind besondere Konstruktionsmaßnahmen getroffen, damit sowohl Fahrzeug als auch Wechselgerät in der Lage sind, auch die erheblichen Gewichte gefüllter Behälter, insbesondere Silos, während des Aufnehmens und Absetzens sicher zu beherrschen. Das bekannte Wechselgerät ist deshalb mit ausfahrbaren, ausklappbaren oder auf sonstige Weise in Bereitschaft bringbaren Abstützungen, insbesondere im Bereich des Fahrzeughecks, ausgerüstet, die vor dem Aufnahme- oder Absetzvorgang in eine Stützstellung gebracht werden, bei der sie das Fahrzeug auf dem Boden bzw. auf der Fahrbahnoberfläche abstützen. Daraus ergibt sich der Nachteil, daß die Abstützungen einen relativ hohen Nutzlastverlust bedeuten und daß außerdem die Standsicherheit des Fahrzeugs, zum Beispiel beim Wegsacken eines Stützbeines, wie es bei ungünstigen Bodenverhältnissen auftreten kann, problematisch ist.

Das Aufnehmen und Absetzen schwerer Behälter, insbesondere Silos, ist außerdem noch dadurch schwierig, daß die Bedienung des bekannten Wechselgeräts sowohl eine Steuerung der Kippbewegung des Kipprahmens als auch gleichzeitig eine Steuerung der Verschiebebewegung der Kulisse des Kipprahmens erfordert. Die Steuerungen werden manuell durchgeführt, da jeder Behälter bzw. jedes Silo aufgrund seiner Bauart oder seiner Abmessungen jeweils angepaßte Bedienung erfordert. Die Sicherheit beim Aufnehmen und Absetzen von Behältern, insbesondere Silos, ist somit in hohem Maße von der Sorgfalt und vom Geschick der Person abhängig, die das Wechselgerät bzw. das Fahrzeug mit dem Wechselgerät zu bedienen hat. Besonders kompliziert gestaltet sich die Bedienung eines anderen, nach der DE-A 33 12 508 bekannten Fahrzeugs mit Wechselgerät, welches noch zusätzlich zur Steuerung der Kippbühne und der Kulisse eine Steuerung eines Arbeitszylinders erfordert, mit dem ein die Kulisse führendes, an dem hinteren Ende der Kippbühne angelenktes Bauteil gegenüber der Kippbühne verschwenkt werden muß, um ein Silo aufzunehmen oder abzusetzen.

Der Erfindung liegt die Aufgabe zugrunde, das Aufnehmen und Absetzen eines Behälters, insbesondere eines Silos, auf bzw. von einem Fahrzeug mit Wechselgerät problemloser zu machen, wenn relativ schwere Behälter mit relativ leichten Fahrzeugen gehandhabt werden.

Diese Aufgabe wird erfindungsgemäß durch ein Verfahren entsprechend den kennzeichnenden Merkmalen von Anspruch 1 sowie durch ein Wechselgerät entsprechend den kennzeichnenden Merkmalen von Anspruch 6 gelöst.

Bei diesem Verfahren wird der Behälter, insbesondere ein Silo, das auf dem Wechselgerät des Fahrzeugs liegend transportiert wurde, zunächst durch gesteuertes Verschieben der Kulisse in eine bestimmte Position nach hinten geschoben. Vorzugsweise soweit, daß nach dem Anstellen des Kipprahmens auf ca. 45° das Ende des Behälters, Silos oder Containers auf den Boden drückt. Dadurch verlagert sich das Gewicht des Behälters auf sein hinteres Ende und ist durch dessen Auflage auf der Fahrbahnoberfläche bzw. den Boden stabilisiert. Daraus ergibt sich der Vorteil, daß auf seitliche Abstützungen des Fahrzeugs verzichtet werden kann, was bedeutet, daß die Nutzlast des Fahrzeugs entsprechend erhöht ist.

Sobald der Behälter diese teilweise abstützende Stellung erreicht hat, wird das Betätigungsorgan der Kulisse auf Freilauf geschaltet, mit dem wesentlichen Vorteil, daß der Kipprahmen dadurch stufenlos in ei- nem durchlaufenden Kippvorgang bis in die Vertikale gekippt werden kann. Während des Kippens bis in die Vertikale bleibt die Kulisse mit dem Silo verbunden, so daß sie sich aufgrund ihres Freilaufs weiter ausschieben kann bzw. selbsttätig ausgezogen wird. Sobald der Behälter bzw. das Silo mit Hilfe des Kipprahmens in die lotrechte Stellung gebracht ist und sicher am Aufstellort steht, kann das Anschlagelement aus dem Beschlag des Behälters bzw. Silos ausgeklinkt werden.

Zum Aufnehmen eines bereits stehenden Behälters, insbesondere Silos, läuft der beschriebene Vorgang umgekehrt ab. Das Fahrzeug fährt an das stehende Silo heran und schwenkt seinen Kipprahmen in die Vertikale und schiebt die Kulisse des Kipprahmens soweit aus, bis das Anschlagelement mit dem Beschlag des Silos in Eingriff bringbar ist. Sobald das Anschlagelement in den Beschlag des Behälters eingeklinkt ist, wird das Betätigungsorgan der Kulisse wieder auf Freilauf geschaltet und der Aufnahmevorgang kann unter Einklappen des Kipprahmens ablaufen, bis der Behälter die etwa 45°-Stellung wieder erreicht hat und danach letztlich auf das Fahrzeug gelegt ist.

Sowohl beim Aufnehmen als auch beim Absetzen schwenkt der Behälter bzw. das Silo um die Auflagepunkte, mit denen sich sein hinteres Ende auf der Fahrbahnoberfläche bzw. dem Boden abstützt. Diese Abstützstellung ist, wie bereits beschrieben, bei einer Kippstellung des Kipprahmens von etwa 45° erreicht. Sie kann jedoch auch bei anderen Kippstellungen größer oder kleiner 45° bereits erreicht sein. Im Schwenkbereich zwischen der aufrechten Stellung und dieser etwa 45°-Stellung sind die Bremsen des mit dem Wechselgerät ausgerüsteten Fahrzeugs zu lösen, damit die Schwenkachse, um die der Kipprahmen sich bewegt, während seiner Kippbewegung der Zwangsführung auf einer Kreisbahn um den Abstützpunkt des Silos auf dem Erdboden folgen kann, indem das Fahrzeug eine Rollbewegung auf der Fahrbahnoberfläche bzw. dem Erdboden ausführt.

Das erfindungsgemäße Verfahren ist mit besonderem Vorteil zum Aufnehmen eines stehenden Behälters so weitergebildet, daß, nach dem Einklinken des Anschlagelements in den Behälter-Beschlag, das Fahrzeugheck am stehenden Behälter um ein vorbestimmtes Maß hochgezogen wird. Das Hochziehen des Fahrzeughecks kann zum Beispiel durch Verkürzen der Länge des Kipprahmens erfolgen, indem die Kulisse mittels ihres Betätigungsorgans in den Kipprahmen entsprechend eingezogen wird. Das Hochziehen des Fahrzeughecks kann zum Beispiel soweit erfolgen, bis die Hinterräder des Fahrzeugs vom Erdboden frei sind. Diese Maßnahme des Hochziehens des Fahrzeughecks hat den Vorteil, daß das Gewicht des Fahrzeugs über die Kipphydraulik als Kontergewicht voll zum Tragen kommt und somit ein Übernehmen eines vertikal stehenden Behälters, insbesondere Silos, auch durch relativ leichte Fahrzeuge vorgenommen werden kann. Der Kipprahmen kann nach dem Hochziehen des Fahrzeughecks zurückgeschwenkt werden, bis die Räder des Fahrzeugs mit dem hinteren Ende des Silos in einer Ebene, hier die Fahrbahnoberfläche, stehen. Danach wird das Betätigungsorgan für die Kulisse wieder auf Freilauf geschaltet, bis der Behälter, insbesondere Silo, vom Fahrzeug aufgenommen ist.

Das erfindungsgemäße Verfahren zum Aufnehmen und Absetzen von Behältern, insbesondere Silos, hat außerdem auch noch den Vorteil, daß Silos oder Behälter, die an einer Stirnseite, auf der sie zum Stehen kommen sollen, entsprechende Entleerungs- oder Befüllungsöffnungen haben und die somit über entsprechenden Öffnungen im Boden punktgenau aufzustellen sind, präzise aufgestellt werden können, weil der Behälter endseitig bereits in Adapter oder dergleichen Führungseinrichtungen eingerastet werden kann, bevor die endgültige Aufstellung erfolgt ist. Dies wird möglich, weil die Rollbewegung des Fahrzeugs eventuell erforderliche Nachjustierungen wäh- rend der Kippbewegung selbsttätig bewirkt.

Das erfindungsgemäße Verfahren, bei dem Betätigungsorgane für eine die Länge des Kipprahmens verändernde Kulisse auf Freilauf geschaltet werden, läßt sich selbstverständlich auch bei Wechselgeräten einsetzen, bei denen die Kulisse durch am Wechselbehälter anschlagbare Seile, Ketten oder dergleichen Zugmittel ersetzt ist, die den Wechselbehälter entlang dem Kipprahmen bewegen können. Wechselgeräte der hier in Rede stehenden Art sind jedoch meistens mit Hydraulik ausgerüstet.

Es sind bereits Wechselgeräte bekannt, bei denen die Kulisse L-förmig ausgebildet ist, wobei ein L-Schenkel im Kipprahmen hin- und herschiebbar geführt ist und der frei abstehende L-Schenkel mit ei- nem Anschlagelement, meistens einem Haken, ausgerüstet ist. Dieser Haken kann in an der Stirnseite von aufzunehmenden Wechselbehältern angeordnete Beschläge eingeklinkt werden, um die Wechselbehälter aufzunehmen und abzusetzen.

Eine besonders vorteilhafte Ausführung eines Wechselgeräts zur Durchführung des erfindungsge mäßen Verfahrens, für die auch selbständiger Schutz beansprucht wird, zeichnet sich dadurch aus, daß die Kulisse als einfacher Schieberahmen ausgebildet ist, dessen freies Ende das Anschlagelement aufweist. Bei einem derartigen Wechselgerät fehlt somit die L-förmige Kulisse. Das Wechselgerät ist demzufolge wesentlich leichter, woraus sich eine weitere Nutzlasterhöhung ergibt. Ein derartiges Wechselgerät ist mit besonderem Vorteil auch geeignet für Fahrzeuge, die mit einer Presse ausgerüstet sind, in welche aufzunehmende Schüttgüter, beispielsweise Hausmüll, eingebbar sind. Die Presse gibt die zusammengepreßten aufgenommenen Materialien dann in einen ebenfalls vom Fahrzeug mittels eines Wechselgeräts aufgenommenen Behälter. Sobald der Behälter gefüllt ist, kann er mit dem Wechselgerät abgesetzt werden, und das Fahrzeug kann einen neuen, leeren Wechselbehälter aufnehmen.

Bei derartigen Fahrzeugen ist die Presse direkt hinter dem Fahrerhaus montiert, wobei der Auslaß der Presse bis in den unmittelbar an die Presse herangesetzten, auf dem Fahrzeug mit dem Wechselgerät getragenen Behälter hineinragt. Mit dem erfindungsgemäßen Wechselgerät, bei dem die Kulisse als einfacher Schieberahmen ausgeführt ist, mit dem sich der Kipprahmen verlängern oder verkürzen läßt, ist das vorteilhafte Verfahren des Aufnehmens und Absetzens von Behältern also auch bei Fahrzeugen mit Presse nutzbar. Das Wechselgerät weist in vorteilhafter Weise geringes Gewicht auf und kann dennoch, wie bereits beschrieben, auch schwere Behälter sicher und problemlos aufnehmen und absetzen.

Bei dem erfindungsgemäßen Wechselgerät ist das Betätigungsorgan für die Kulisse wenigstens ein Arbeitszylinder, beispielsweise ein doppelt wirkender Arbeitszylinder. Um das Betätigungsorgan auf Freilauf zu schalten, ist eine betätigbare Anordnung vorgesehen, durch die ein solcher Arbeitszylinder in Schwimmstellung bringbar ist. Dies kann z.B. dadurch erreicht werden, daß in die Druckmittelförderleitungen des Arbeitszylinders für das Verschieben der Kulisse ein mittels betätigbarer Absperrorgane in Einsatz bringbarer Bypass einge setzt ist.

Weiterhin zeichnet sich das Wechselgerät dadurch aus, daß das Anschlagelement ein betätigbares Verriegelungsorgan aufweist. Das Verriegelungsorgan erlaubt die Beibehaltung der gegenseitigen Einklinkung von Anschlagelement der Kulisse und Beschlag des Behälters auch dann, wenn die Kulisse eingefahren wird, um das Fahrzeugheck an einem aufzunehmenden, stehenden Behälter hochzuziehen.

Das Verriegelungsorgan kann z.B. ein einfacher, manuell oder pneumatisch, hydraulisch usw. betätigbarer Sperriegel sein, der ein Hakenmaul eines als Haken ausgebildeten Anschlagelementes sperren kann.

Insbesondere während des Transportes des auf dem Fahrzeug liegenden Behälters muß eine Seitenverschiebung des Behälters vermieden werden.

Nach einer vorteilhaften Weiterbildung ist eine derartige Sicherung bei dem erfindungsgemäßen Wechselgerät dadurch realisiert, daß der Kipprahmen in seinem Seitenbereich befindliche, in Führungselemente am Behälter eingreifende Führungsorgane aufweist.

Damit ein unter Umständen mühsames Justieren von Behälter und Kipprahmen vermieden wird, um dadurch die Führungselemente mit den Führungsorganen in Eingriff zu bringen, ist vorgesehen, daß die Führungsorgane am Kipprahmen in und aus der Eingreifstellung klappbar gehalten sind. Jedes Führungsorgan ist mit besonderem Vorteil als am Kipprahmen gelagerte Klapprolle ausgebildet, die einen in eine Führungsschiene des Behälters vorstehenden Rollkörper hat, der mit einem radial vorstehenden Radkranz ausgerüstet ist, um auch außen an der Führungsschiene Seitenführungsfunktionen zu erfüllen.

Ausführungsbeispiele der Erfindung, aus denen sich weitere erfinderische Merkmale ergeben, sind in der Zeichnung dargestellt. Es zeigen:
Fig. 1 - Fig. 1d Seitenansichten eines Fahrzeugs mit Wechselgerät in den einzelnen Verfahrensschritten beim Absetzen und Aufnehmen eines Silos,
Fig. 2 eine Seitenansicht eines Fahrzeugs mit einem Wechselgerät, das eine L-förmige Kulisse hat und mit aufgenommenen Behälter,
Fig. 3 eine schematische Seitenansicht des oberen Teiles eines in das Wechselgerät eingeklinkten Behälters,
Fig. 4 eine schematische Seitenansicht eines Müllsammelfahrzeugs mit aufgenommenem Wechselbehälter, Presse und Beladeeinrichtung,
Fig. 5 das Fahrzeug gemäß Fig. 4 während des Absetzens des aufgenommenen Behälters mit dem erfindungsgemäßen Wechselgerät,
Fig. 6 das Fahrzeug gemäß Fig. 4 mit hinter dem Fahrzeug abgesetztem Behälter,
Fig. 7 eine Teilansicht des Fahrzeughecks mit angestelltem Kipprahmen, Behälter und am Kipprahmen klappbar angeordneten Führungsorganen und
Fig. 8 das in Fig. 7 dargestellte Führungsorgan in einer vergrößerten schematischen Schnittansicht.

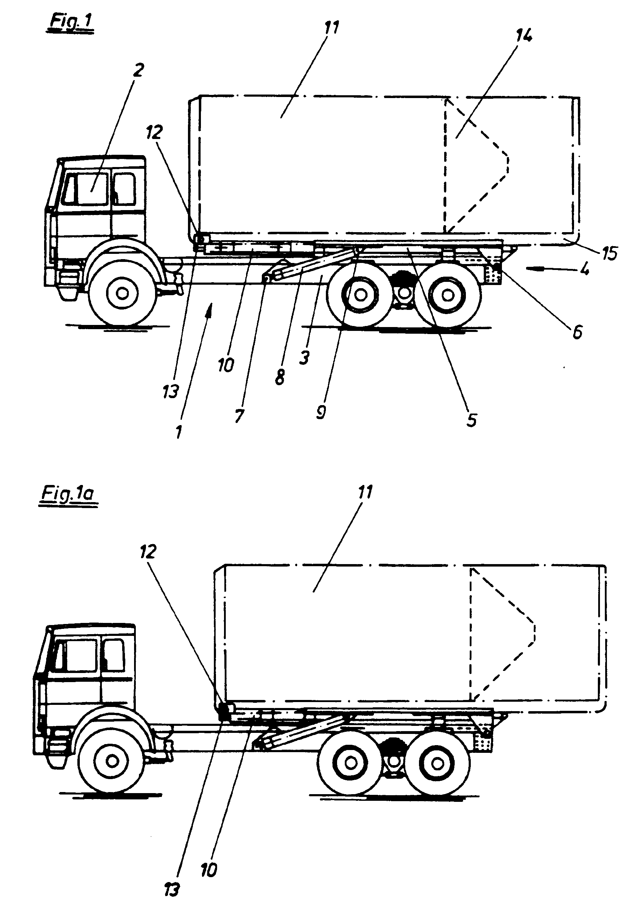

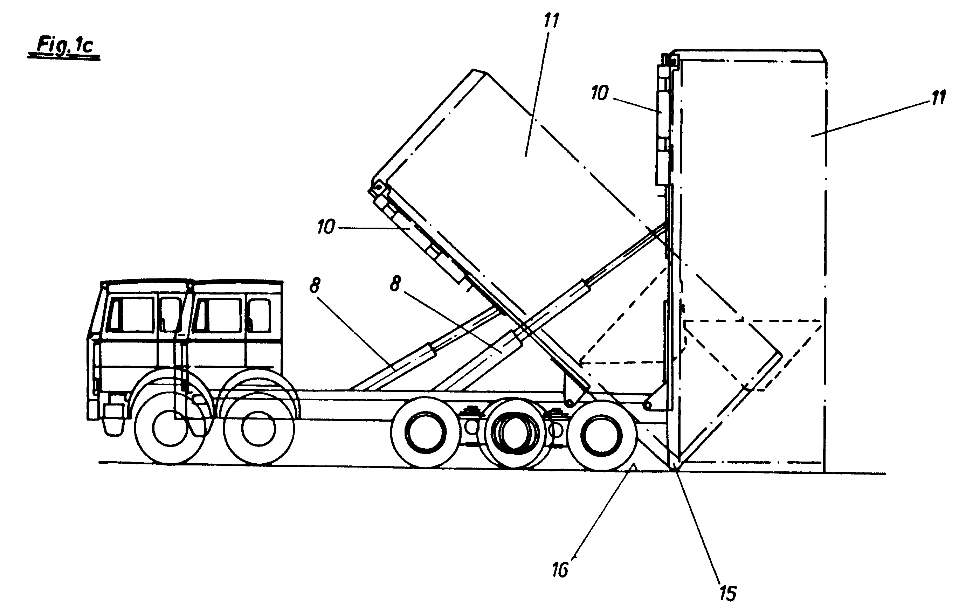

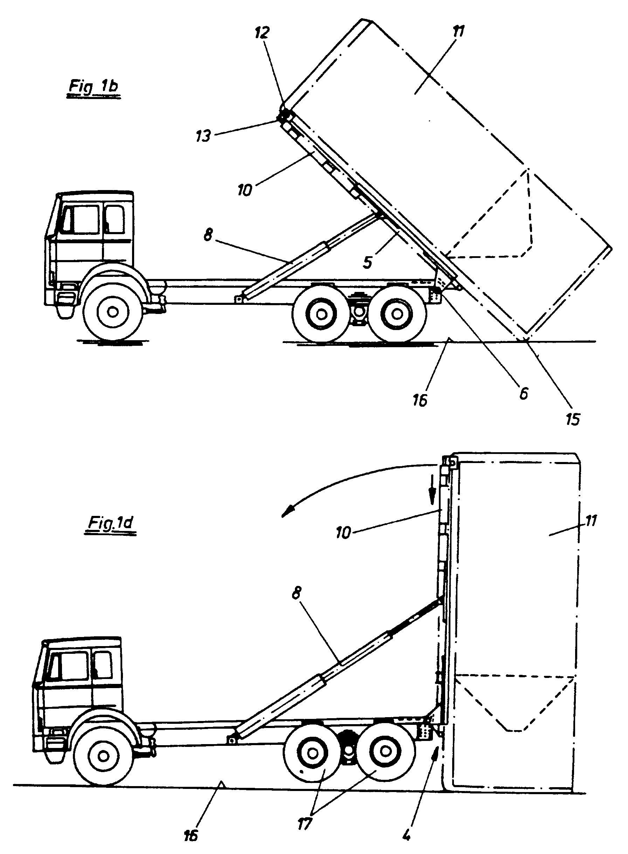

Fig. 1 zeigt ein Fahrzeug 1 mit Fahrerkabine 2 und Chassis 3. Am Chassis ist hinten im Bereich des Fahrzeughecks 4 ein Kipprahmen 5 angelenkt. Der Kipprahmen ist um die hier angedeutete Achse 6 schwenkbar. Am Chassis ist im Anlenkpunkt 7 ein Kippzylinder 8 abgestützt, der am Kipprahmen 5 bei 9 angreift. Fährt der Kolben des Kippzylinders 8 aus, wird der Kipprahmen 5 um die Achse 6 geschwenkt und in vorbestimmte Kippstellungen gebracht. Das vordere freie Ende des Kipprahmens 5 ist als Führung für eine Kulisse 10 ausgebildet. Die Kulisse 10 kann mittels eines hier nicht weiter dargestellten Betätigungsorgans, beispielsweise eines Arbeitszylinders, aus dem Kipprahmen herausgeschoben werden, um diesen zu verlängern oder eingezogen werden, um den Kipprahmen zu verkürzen.

Ein Behälter 11, hier ein Silo, liegt auf dem Kipprahmen 5 und dessen Kulisse 10. Der Behälter hat einen Beschlag 12, mit dem er in ein Anschlagelement 13 am freien Ende der Kulisse 10 eingeklinkt ist. Bei Ausschieben oder Einschieben der Kulisse relativ zum Kipprahmen 5, kann der Behälter 11 somit auf dem Fahrzeug zum Fahrerhaus 2 hin gezogen werden oder, bei Verkürzen des Kipprahmens durch Einschieben der Kulisse 10, nach hinten über das Fahrzeugheck 4 hinausgeschoben werden, bis die Standfüße am hinteren Ende 15 des Behälters, die den mit einem Auslaß ausgerüsteten Boden 14 bei stehendem Behälter in vorgesehener Freihöhe über der Standfläche halten, um ein vorbestimmtes Maß über das Fahrzeugheck vorstehen. Eine solche Stellung zeigt Fig. 1a. Dabei hat sich das Gesamtgewicht des Behälters in Richtung auf die Hinterachse des Fahrzeugs verlagert.

Gemäß Fig. 1b wird in einem nächsten Verfahrensschritt der Kippzylinder 8 ausgefahren, so daß sich das untere hintere Ende 15 des Behälters wie dargestellt auf den Boden, hier die Fahrbahnoberfläche 16, auflegt. Der Schwerpunkt des Behälters, und damit sein Gesamtgewicht, befindet sich bei dieser Kippstellung von etwa 45° noch in etwa über der Hinterachse des Fahrzeugs, so daß die Auflagepunkte des angekippten Behälters auf der Fahrbahnoberfläche und die hinteren Räder des Fahrzeugs eine Mehrpunktauflage für den angekippten Behälter bilden, der damit in dieser Stellung relativ sicher steht.

Zur Durchführung der weiteren Ankippung des Kipprahmens, bis der Behälter lotrecht steht, wird das Betätigungsorgan der Kulisse, hier ein doppelt wirkender Arbeitszylinder, auf Freilaufstellung geschaltet, was bei dem Zylinder durch entsprechende Bypässe in den Druckmittelzuführungen erfolgen kann. Der die Kulisse bewegende Arbeitszylinderwird dadurch in eine sogenannte "Schwimmstellung" gebracht, wodurch sich die Kulisse frei bewegen kann, wenn der Kippzylinder 8 den Kipprahmen und damit auch den Behälter aus der 45°-Stellung gemäß Fig. 1b in die lotrechte Stellung gemäß Fig. 1c überführt, wobei die in Fig. 1c angedeuteten unterschiedlichen Kippstellungen kontinuierlich durchlaufen werden. Der Behälter schwenkt dabei um eine Achse, die in der Ebene der Fahrbahnoberfläche liegt. Die Achse 6, um die der Kipprahmen gegenüber dem Chassis schwenkt, kann dabei mitwandem, wenn die Fahrzeugbremsen gelöst sind ; denn beim Aufrichten des Behälters rollt das Fahrzeug dann rückwärts und nähert sich dabei dem Abstützpunkt des Behälters auf der Fahrbahnoberfläche.

Bein Aufnehmen eines Behälters läuft der Vorgang umgekehrt ab. Das Fahrzeug fährt an den stehenden Behälter heran. Der Kipprahmen wird in eine lotrechte Stellung gebracht, bis er am stehenden Behälter anliegt und sein Anschlagelement in den Beschlag 12 des Behälters eingeklinkt ist. Diese Position entspricht der lotrechten Stellung des Behälters in Fig. 1c.

Durch Verkürzen des lotrecht abgeklappten Kipprahmens, was z.B. durch Einschieben der Kulisse 10 in den Kipprahmen erfolgen kann, wird das Fahrzeugheck 4 am Behälter 11 hochgezogen, bis die Räder 17 des Fahrzeugs von der Fahrbahnoberfläche 16 mehr oder weniger abgehoben sind, wie es in Fig. 1d dargestellt ist. In Fig. 1d ist der Kippzylinder 8, hier ein Mehrstufenzylinder, ausgefahren. Zum Aufnehmen des Behälters 11 wird der Kippzylinder eingefahren, bis die Hinterräder 17 des Fahrzeugs wieder den Boden berühren. Während dieser Kippbewegung dient das Fahrzeuggewicht als Kontergewicht zum Ankippen des Behälters 11. Dadurch können auch gefüllte und dadurch relativ schwere Behälter 11 mit relativ leichten Fahrzeugen problemlos aufgenommen werden.

Die weiteren Phasen des Aufnehmens laufen wie vorbeschrieben entsprechend umgekehrt ab, bis der Behälter wieder, wie in Fig. 1 dargestellt, auf dem Fahrzeug liegt.

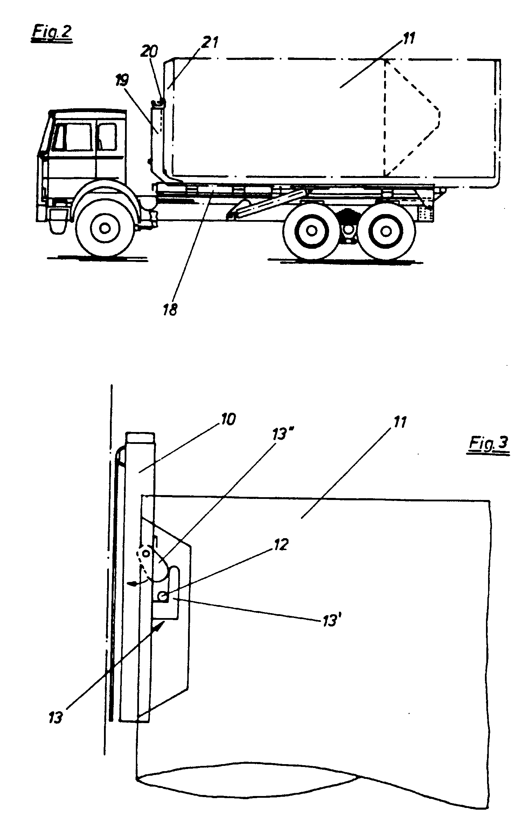

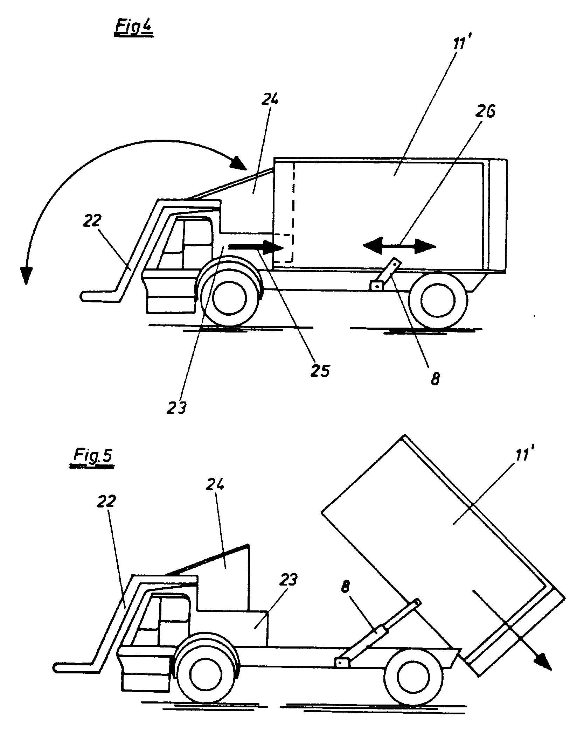

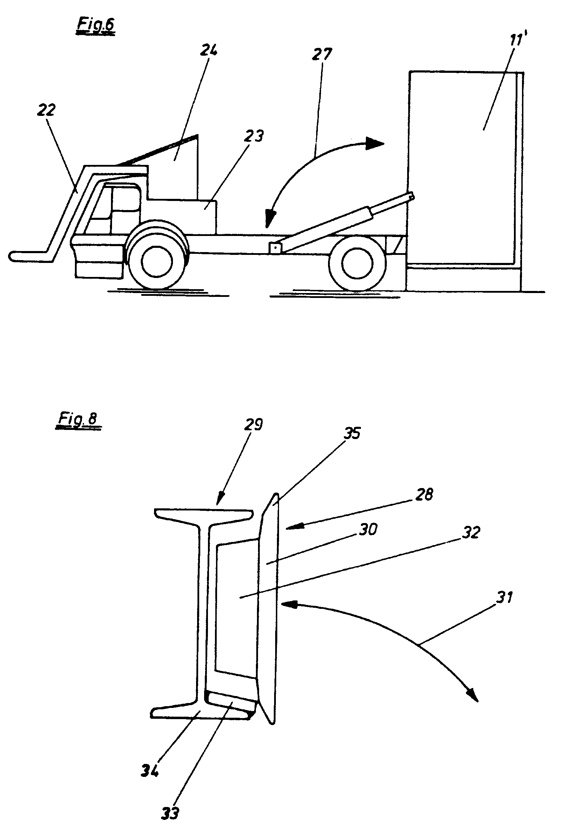

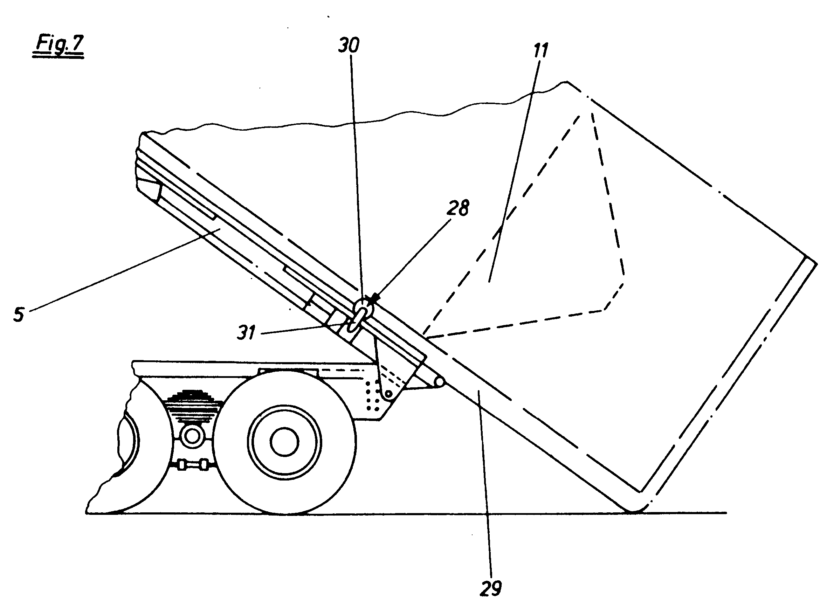

Fig. 2 zeigt ein Fahrzeug mit aufgenommenem Behälter 11. Das Wechselgerät des Fahrzeugs besteht hier wiederum aus einem Kipprahmen entsprechend Fig. 1 und einer den Kipprahmen verlängemden oder verkürzenden Kulisse, wobei die Kulisse jedoch als L-förmiger Arm ausgebildet ist, dessen einer L-Schenkel 18 im Kipprahmen ein- und ausschiebbar geführt ist, während der andere etwa lotrecht dazu stehende L-Schenkel 19 an seinem oberen freien Ende das hier als Haken 20 ausgebildete Anschlagelementaufweist, welches in einen entsprechenden Beschlag an der Stirnseite 21 des Behälters einklinkbar ist. Zur Verstärkung der Halterung des Behälters 11 kann zusätzlich am L-Schenkel 18 ein etwa gemäß Fig. 3 ausgebildetes Anschlagelement angeordnet sein, das in einen an der Behälterseite angeordneten Beschlag einklinkbar ist. Mit einem derart ausgebildeten Wechselgerät kann das Auf- und Abnehmen so, wie es in Fig. 1 - Fig. 1d dargestellt ist, ebenfalls ausgeführt werden.

Damit das Fahrzeugheck in vorbeschriebener Weise am Behälter hochgezogen werden kann, bedarf es der besonderen Ausbildung des Anschlagelementes 13, das den Beschlag 12 des aufzunehmenden Behälters ergreift. Eine Ausführungsmöglichkeit für ein dafür geeignetes Anschlagelement 13 ist in Fig. 3 dargestellt, welche eine schematische Seitenansicht des oberen Teiles eines in das Wechselgerät eingeklinkten Behälters 11 zeigt. Das Anschlagelement 13 umfaßt einen von der Kulisse 10 vorstehenden Haken 13', der einen als Bolzen ausgebildeten Beschlag 12 mit dem Hakenmaul erfassen kann. An der Kulisse ist ein betätigbares Verriegelungsorgan angeordnet, welches als das Hakenmaul sperrender Schwenkriegel 13'' ausgebildet ist. Der Schwenkriegel kann elektromagnetisch, pneumatisch oder hydraulisch bewegt werden.

Fig. 4 zeigt die schematische Seitenansicht eines Fahrzeugs, mit dem z.B. Hausmüll gesammelt werden kann. Das Fahrzeug hat an seiner Frontseite, die mit dem Fahrerhaus ausgerüstet ist, eine an sich bekannte Beladeeinrichtung 22. Hinter dem Fahrerhaus ist eine hier lediglich angedeutete Presse 23 montiert, in deren Eingabeschacht 24 das mit der Beladeeinrichtung 22 aufgenommene Gut eingegeben werden kann. Die Presse fördert in Richtung des Pfeils 25 in einen auf dem Fahrzeug aufgenommenen Behälter 11', der an seiner der Presse zugekehrten Stirnseite eine entsprechende Öffnung hat, durch die die Austrittsmündung der Presse bis in den Behälter hineinragt. Das Fahrzeug ist mit einem Wechselgerät zum Aufnehmen und Absetzen des Behälters 11' ausgerüstet, von dem hier lediglich der Kippzylinder 8 angedeutet ist. Die ein- und ausschiebbare Kulisse des Kipprahmens hat den Vorteil, daß der noch auf dem Fahrzeug befindliche Behälter 11, sobald er abgesetzt werden soll, von der Mündung der Presse nach hinten abgezogen werden kann oder ein leerer Behälter, der gerade aufgenommen wurde, gegen die Presse vorschiebbar ist, wie es durch den Doppelpfeil 26 verdeutlicht wurde.

Zum Absetzen des Behälters wird der Kippzylinder 8 ausgefahren (Fig. 5), wobei der Absetzvorgang wie vorbeschrieben abläuft. Der gefüllte Behälter kann auf einer Stirnseite stehend abgesetzt und bis zum Weitertransport gelagert werden, wie es in Fig. 6 dargestellt ist. Stehende Behälter können selbstverständlich auch aufgenommen werden, wobei dann die Schwenkbewegung des Kipprahmens umgekehrt wird. Aufnehmen und Absetzen ist in Fig. 6 durch den Doppelpfeil 27 angedeutet.

In Fig. 7 ist das Fahrzeugheck in schematischer Seitenansicht dargestellt. Auf dem angekippten Kipprahmen 5 liegt ein hier nur angedeutet gezeichneter Silo-Behälter 11, der an seiner dem Kipprahmen zugekehrten Seite mit Führungselementen 29 versehen ist. Jedes Führungselement 29 ist eine Profilschiene, beispielsweise ein U-Profil oder I-Profil, die so am Behälter angeordnet ist, daß der Behälter mit zwei parallelen Profilschienen auf dem Kipprahmen aufliegt.

Am Kipprahmen sind in die Führungselemente 29 eingreifende Führungsorgane 28 angeordnet. Jedes Führungsorgan umfaßt eine Klapprolle 30, die am freien Ende eines Klapphebels 31 gelagert ist Der Klapphebel 31 ist am Kipprahmen 5 angelenkt Die Klappbarkeit der Klapprolle ermöglicht, die Führungsorgane 28 wahlweise in oder außer Eingriff mit den Führungselementen 29 des Behälters 11 zu bringen.

In Fig. 8 ist eine Schnittansicht eines Führungselementes, hier ein I-Profil, dargestellt, in welches ein als Klapprolle 30 ausgebildetes Führungsorgan 28 eingreift. Die Klappbarkeit ist durch den Doppelpfeil 31 verdeutlicht Fig. 8 läßt erkennen, daß jede Klapprolle 30 aus einem Rollkörper 32 besteht, der zwischen die T-Flansche des I-Profils greift und sich auf einer Verstärkungsschiene 33 des unteren T-Flansches 34 abwälzen kann. Zum Zwecke der Seitenführung hat jeder Rollkörper einen vorstehenden Radkranz 35.

## Patentansprüche

1. Verfahren zum Aufnehmen und Absetzen eines Hohl-Behälters, wie Silo, Container oder dergleichen auf bzw. von einem Fahrzeug mit Wechselgerät, das einen Kipprahmen aufweist, der am Fahrzeug-Chassis hinten angelenkt und mittels eines am Chassis abgestützten Kippzylinders bewegbar ist und der eine am Kipprahmen mittels zugeordneter Betätigungsorgane verschiebbare Kulisse hat, die mit einem mit dem zugeordneten Beschlag am Behälter in Eingriff bringbaren Anschlagelement ausgerüstet ist, wobei der Behälter sich in Transportstellung liegend und in abgesetzter Stellung aufrecht stehend befindet,
dadurch gekennzeichnet,
daß, zum Absetzen des Behälters (11, 11') die Kulisse (10) eingefahren wird, bis das hintere Ende des Behälters (11, 11') um ein vorbestimmtes Maß über das Fahrzeugheck (4) vorsteht, daß der Kipprahmen (5) danach angekippt wird, bis der untere Bereich (15) am hinteren Ende des Behälters (11, 11') auf der Fahrbahnoberfläche (16) aufliegt, daß die Betätigungsorgane der Kulisse (10) auf Freilauf geschaltet werden und daß danach, bei gegebenenfalls gelösten Fahrzeugbremsen, der Kipprahmen (5) weiter angekippt wird, bis der Behälter (11, 11') auf seinem hinteren Ende aufrecht steht und Anschlagelement (13) und Beschlag (12) außer Eingriff bringbar sind.

2. Verfahren nach Anspruch 1, dadurch gekennzeichnet, daß die Kulisse (10) soweit eingefahren wird, daß der Behälter (11,11') mit seinem hinteren Ende bei einem Anstellwinkel des Kipprahmens (5) von etwa 45° die Fahrbahnoberfläche (16) berührt.

3. Verfahren zum Aufnehmen und Absetzen eines Behälters nach Anspruch 1 und 2, dadurch gekennzeichnet, daß, zum Aufnehmen eines stehenden Behälters (11,11'), nach dem Einklinken des Anschlagelementes (13) in den Behälter-Beschlag (12), das Fahrzeugheck (4) am stehenden Behälter (11,11') um ein vorbestimmtes Maß hochgezogen wird.

4. Verfahren nach Anspruch 3, dadurch gekennzeichnet, daß das Fahrzeugheck (4) durch Verkürzen der Länge des Kipprahmens (5) hochgezogen wird.

5. Verfahren nach Anspruch 4, dadurch gekennzeichnet, daß der Kipprahmen (5) durch Einfahren der Kulisse (10) mittels seines Betätigungsorgans verkürzt wird.

6. Wechselgerät mit den gegenständlichen Merkmalen des Anspruchs 1 zur Durchführung des Verfahrens gemäß den Ansprüchen 1 bis 5, wobei das Betätigungsorgan für die Kulisse (10) wenigstens einen Arbeitszylinder aufweist, dadurch gekennzeichnet, daß der Arbeitszylinder durch eine betätigbare Anordnung in Schwimmstellung bringbar ist, daß der Kipprahmen (5) in seinem Seitenbereich befindliche, in Führungselemente (29) am Behälter (11) eingreifende Führungsorgane (28) aufweist, und daß die Führungsorgane (28) am Kipprahmen (5) in und aus der Eingreifstellung klappbar gehalten sind.

7. Wechselgerät nach Anspnuch 6, dadurch gekennzeichnet, daß die betätigbare Anordnung einen mittels betätigbarer Absperrorgane in Einsatz bringbaren Bypass der dem Arbeitszylinder zugeordneten Druckmittelförderleitung umfaßt.

8. Wechselgerät nach einem der Ansprüche 6 und 7, dadurch gekennzeichnet, daß die Kulisse (10) als einfacher Schieberahmen ausgebildet ist, deren freies Ende das Anschlagelement (13) aufweist.

9. Wechselgerät nach einem der vorhergehenden Ansprüche, insbesondere nach Anspruch 8, dadurch gekennzeichnet, daß das Anschlagelement (13) ein betätigbares Verriegelungsorgan aufweist.

10. Wechselgerät nach Anspruch 9, dadurch gekennzeichnet, daß das Anschlagelement (13) als Haken (13') ausgebildet ist und daß das Verriegelungsorgan ein das Hakenmaul sperrender Schwenkriegel (13'') ist.

11. Wechselgerät nach Anspruch 10, dadurch gekennzeichnet, daß jedes Führungsorgan (28) als am Kipprahmen (5) gelagerte Klapprolle (30) ausgebildet ist.

## Claims

1. A method of lifting and lowering a hollow receptacle, such as a silo, container or the like, on and/or from a vehicle with changing device, which has a tipping frame which is articulated to the vehicle chassis at the rear and can be moved by means of a tipping cylinder supported on the chassis and which has a crank which can be displaced on the tipping frame by means of associated operating members, which crank is equipped with a stop element which can be brought into engagement with the associated fitting on the receptacle, the receptacle being horizontal in the transporting position and upright in the lowered position,
characterised
in that, to lower the receptacle (11, 11'), the crank (10) is drawn in until the rear end of the receptacle (11, 11') projects over the vehicle rear (4) by a predetermined distance,
in that the tipping frame (5) is subsequently tipped until the lower region (15) at the rear end of the receptacle (11, 11' ) lies on the road surface (16), in that the operating members of the crank (10) are switched to freewheel and
in that, subsequently, the tipping frame (5) is tipped further, until the receptacle (11, 11') stands upright on its rear end and the stop element (13) and fitting (12) can be brought out of engagement, the vehicle brakes being released if appropriate.

2. A method according to Claim 1, characterised in that the crank (10) is drawn in so far that the receptacle (11, 11') touches the road surface (16) with its rear end, the tipping frame (5) having an angle of pitch of approx. 45 degrees.

3. A method of lifting and lowering a receptacle according to Claims 1 and 2, characterised in that, to lift a standing receptacle (11, 11'), the vehicle rear (4) is drawn up on the standing receptacle (11, 11' ) by a predetermined distance, after the stop element (13) has engaged with the receptacle fitting (12).

4. A method according to Claim 3, characterised in that the vehicle rear (4) is drawn up by shortening the length of the tipping frame (5).

5. A method according to Claim 4, characterised in that the tipping frame (5) is shortened by drawing in the crank (10) by means of its operating member.

6. A changing device with the objective features of Claim 1, for carrying out the method according to Claims 1 to 5, the operating member for the crank (10) having at least one working cylinder, characterised in that the working cylinder can be brought into a floating position by an operable arrangement, in that the tipping frame (5) has guide members (28) found in its side region and engaging with guide elements (29) on the receptacle (11), and in that the guide members (28) are held on the tipping frame (5) so that they can be tilted in and out of the engagement position.

7. A changing device according to Claim 6, characterised in that the operable arrangement comprises a by-pass of the pressure-medium conveying-line assigned to the working cylinder, which by-pass can be implemented by means of operable blocking members.

8. A changing device according to any one of Claims 6 to 7, characterised in that the crank (10) is constructed as a simple sliding frame, the free end of which has the stop element (13).

9. A changing device according to any one of the preceding Claims, in particular according to Claim 8, characterised in that the stop element (13) has an operable bolting member.

10. A changing device according to Claim 9, characterised in that the stop element (13) is constructed as a hook (13' ) and in that the bolting member is a swivelling bolt (13'') blocking the head of the hook.

11. A changing device according to Claim 10 , characterised in that each guide member (28) is constructed as a tilting roller (30) mounted on the tilting frame (5).

## Revendications

1. Procédé pour charger et décharger un récipient creux, tel qu'un silo, un conteneur ou autre du même genre, sur ou d'un véhicule à l'aide d'un dispositif interchangeable qui présente un cadre basculant, articulé à l'arrière du châssis du véhicule et qui est déplaçable grâce à un cylindre basculant supporté par le châssis et qui a une coulisse, elle-même déplaçable, au moyen d'un organe d'actionnement ajouté audit cadre et qui est équipé d'un élément d'arrêt pouvant engréner sur le récipient par une armature supplémentaire, de façon que le récipient se trouve couché en position de chargement et verticalement dressé en position de déchargement,
caractérisé par le fait que, pour le déchargement du récipient (11, 11'), la coulisse (10) est avancée dans une mesure prédéterminée à l'arrière du véhicule (4) de sorte que le cadre basculant (5) soit basculé jusqu'à ce que la zone inférieure (15) à l'extrémité arrière du récipient (11, 11') vienne s'appliquer sur la surface de la piste de roulage (16), que l'organe d'actionnement de la coulisse (10) soit enclenché en course libre, et, qu'ensuite, grâce à un relâchement éventuel du frein du véhicule, le cadre basculant (5) soit de nouveau basculé jusqu'à ce que le récipient (11, 11') se trouve verticalement dressé sur son extrémité arrière et que l'élément d'arrêt (13) et l'armature (12) soient amenés hors de prise.

2. Procédé selon la revendication 1 caractérisé par le fait que la coulisse (10) est avancée assez loin pour que le récipient (11, 11') par son extrémité arrière vienne au contact de la surface de la piste de roulage (16) avec un angle d'incidence d'environ 45°.

3. Procédé pour le chargement et le déchargement d'un récipient selon les revendications 1 et 2, caractérisé par le fait que pour le chargement d'un récipient (11, 11') en position verticale, après l'enclenchement de l'élément d'arrêt (13) sur l'armature (12) du récipient, l'arrière du véhicule (4) vient se soulever dans une mesure prédéterminée sur ledit récipient vertical (11, 11').

4. Procédé selon la revendication 3, caractérisé par le fait que l'arrière du véhicule (4) est soulevé au moyen d'un raccourcissement de la longueur du cadre basculant (5).

5. Procédé selon la revendication 4, caractérisé par le fait que le cadre basculant (5) est raccourci par l'introduction de la coulisse (10) au moyen de son organe d'actionnement.

6. Dispositif interchangeable comportant les caractéristiques objectives de la revendication 1 pour la réalisation du procédé selon les revendications 1 à 5, dans lequel l'organe d'actionnement pour la coulisse (10) présente au moins un cylindre de travail, caractérisé en ce que le cylindre de travail peut être amené en position flottante par un dispositif mobile, en ce que le cadre basculant (5) présente des éléments de commande (29) se trouvant dans sa région latérale et engrenant avec des organes de commande (29) du récipient (11), et en ce que les organes de commande (28) peuvent être repliés sur le cadre basculant (5) et être maintenus en position de prise ou de relâchement.

7. Dispositif interchangeable selon la revendication 6, caractérisé par le fait que le dispositif mobile comprend un bypass pouvant être mis en oeuvre au moyen d'un organe de blocage mobile, dans la conduite d'alimentation sous pression du cylindre de travail.

8. Dispositif interchangeable selon l'une des revendications 6 et 7, caractérisé par le fait que la coulisse (10) est configurée comme un châssis coulissant simple dont l'extrémité libre présente l'élément d'arrêt (13).

9. Dispositif interchangeable selon l'une des revendications précédentes, en particulier selon la revendication 8, caractérisé par le fait que l'élément d'arrêt (13) présente un organe de verrouillage pouvant être actionné.

10. Dispositif interchangeable selon la revendication 9, caractérisé par le fait que l'élément d'arrêt (13) est configuré comme un crochet (13') et que l'organe de verrouillage est un verrou pivotant (13'') bloquant la mâchoire du crochet.

11. Dispositif interchangeable selon la revendication 10, caractérisé par le fait que chacun des organes de commande (28) est constitué par une poulie rabattable (30) située dans le cadre basculant.
